# EUROPEAN PATENT SPECIFICATION

(11) **EP 3 600 604 B1**
(45) Date of publication and mention of the grant of the patent: **11.11.2026**
(21) Application number: 18716072.6
(22) Date of filing: 20.03.2018
(51) Int. Cl.: B01D 46/24

(54) **SYSTEM COMPRISING A CONNECTOR FOR COUPLING TO A FLUID FILTER ELEMENT, FLUID FILTER ELEMENT, AND PROCESS FOR PRODUCING SAME**
SYSTEM MIT EINEM VERBINDER ZUR KOPPLUNG AN EIN FLUIDFILTERELEMENT, FLUIDFILTERELEMENT UND VERFAHREN ZUR HERSTELLUNG DAVON
SYSTÈME COMPRENANT UN CONNECTEUR DESTINÉ À ÊTRE COUPLÉ À UN ÉLÉMENT FILTRE À FLUIDE, ÉLÉMENT FILTRE À FLUIDE ET SON PROCÉDÉ DE PRODUCTION

(30) Priority: 20.03.2017 US 201762473806 P
(43) Date of publication of application: 05.02.2020
(73) Proprietor: Donaldson Company, Inc., Bloomington, MN 55431 (US)
(72) Inventor: DECUGNIERE, Antoine, Minneapolis, MN 55440-1299 (US)
(74) Representative: Oryon NV
(86) International application number: PCT/US2018/023358
(87) International publication number: WO 2018/175438

(56) References cited:
- EP-A1- 1 438 997
- EP-A1- 2 108 424
- EP-A1- 2 764 901
- WO-A1-2007/085427
- WO-A1-2014/088600
- DE-A1- 102004 029 641
- DE-U1- 202006 011 990

## Description

### Field of the Invention

The present invention pertains to a system comprising a connector for coupling to a fluid filter element, a fluid filter element, and a process for producing same. The system may in particular be an air filtering subsystem presenting a connector for receiving an exchangeable air filter element.

### Background

Systems that need a supply of filtered air for their operation, such as internal combustion engines, and systems that tend to cause air to be loaded with particulate impurities during their operation, such as drills and earth moving equipment, typically present a connector for receiving an exchangeable air filter element. Known connectors are of the male screw-thread type, requiring a filter element having a female screw-thread, or vice versa, the filter element having to be screwed on by means of multiple full rotations of the element. These systems may be of the top-load or the bottom-load type.

EP1438997A1 discloses a fuel filter comprising a beaker-like housing containing a filter element separating a crude side from a pure side. The crude side is connected to an inlet and the pure side to an outlet. The filter element has a central channel with a middle tube. The housing is closed by a lid which is formed as one-piece with the middle tube.

DE102004029641A1 discloses a device for filtering fluids comprising a filter element arranged in a housing having housing parts which slide relative to each other along a guide track. The housing parts can be locked along a locking track using a locking unit.

WO2007085427A1 discloses a filter element comprising a filter medium and at least one connecting element connected to the filter medium, the connecting element having sealing means that extend at least in two different directions for sealing contact with an abutment.

DE202006011990U1 discloses a filter unit with a housing and a cylindrical filter element which can be inserted therein and which is connected at each end to an end plate.

EP2108424A1 discloses a system having elongated receiving slots and insertion projections arranged in a perpendicular plane extending perpendicularly to an insertion direction. The receiving slots are segmented and interrupted by segmentation, where the receiving slots are sequentially arranged in the insertion direction, and arranged parallel to one another. The insertion projections are sequentially arranged in the insertion direction, where the insertion projections are interrupted by segmentation.

WO2014088600A1 discloses a system having a rapid-engaging, positive locking machine screw mechanism comprises a screw having a head and a body, the body comprising male threads formed thereon and at least one longitudinal segment devoid of threads. A work piece defines a hole having female threads formed therein for receiving the screw and further defines in a portion of the hole, at least one longitudinally extending segment devoid of female threads. The longitudinal screw segment devoid of male threads and the longitudinal hole segment devoid of female threads are arranged such that the screw body is longitudinally received in the hole without engagement of the male screw threads with the female work piece threads. The rapid-engaging, positive locking thread configuration can be applied to a variety of mechanical interfaces. Additionally, thread locking configurations, such as a boos- depression interface, a notch and ridge, etc. can be incorporated to secure the male and female threads.

EP2764901A1 discloses filter element including a ring of filtration media circumscribing a central axis and defining a central cavity. An annular end cap of the filter element is sealingly bonded at an end of the media. The end cap includes a central opening into the central cavity, and a lateral opening spaced laterally outward from the central opening. The central opening includes a threaded connection portion to enable the element to be spun-on to a complementarily-threaded connection portion of a filter head. The connection portion of the central opening includes at least one axially-extending slot opening radially away from the connection portion.

There is a need for a connection system that allows for a less cumbersome installation process, while retaining backward compatibility with existing equipment.

### Summary

It is an object of the present disclosure to provide connectors according to claims 1 and 2, fluid filter elements according to claims 3 and 4 and a system according to claim 7.

According to an aspect of the present invention, there is provided a system comprising a connector for coupling to a fluid filter element, the fluid filter element comprising an end cap provided with a first coupling means, the connector comprising a second coupling means; wherein said first coupling means comprises a substantially cylindrical bore presenting an inner threading pattern composed of a number of threaded segments interrupted by non-interfering segments, and said second coupling means comprises a substantially cylindrical protrusion presenting an outer threading pattern composed of a number of threaded segments interrupted by non-threaded segments, or vice versa; wherein said non-threaded segments are distributed along the circumference of said substantially cylindrical protrusion so as to only allow said substantially cylindrical bore to slide over said substantially cylindrical protrusion without interference between said threaded segments of said substantially cylindrical protrusion and said threaded segments of said substantially cylindrical bore when said substantially cylindrical bore and said substantially cylindrical protrusion are in one of a set of predetermined relative angular position ranges; and wherein said threaded segments of said substantially cylindrical protrusion are arranged to allow engagement with said threaded segments of said substantially cylindrical bore, when said substantially cylindrical bore has been slid over said substantially cylindrical protrusion, by means of a rotation.

The present invention is based *inter alia* on the insight of the inventor that the benefits of bayonet couplers (notably, the faster attachment/detachment than for screw-on couplers) can be achieved while maintaining backward compatibility with screw-thread based systems by modifying the screw thread on the end cap so as to include judicially arranged non-interfering segments. Accordingly, fluid filter elements according to the present invention may be installed on systems according to the present invention but also on prior-art systems presenting a thread-based connector. The term "fluid filter" is used herein to include gas (including air) and liquid filters.

The non-interfering segments may for example be segments devoid of thread (i.e., presenting an interruption in the thread pattern) or segments that are radially displaced relative to the remainder of the end cap so as to be physically unable to engage with the thread on the relevant threaded segments of the connector according to the present invention.

The "predetermined relative angular position ranges" may consist of one or more particular angular positions (and a specific range around this position or these positions) in which the non-interfering segments are in such a positional relationship to the threaded segments of the protrusion that the end cap can be slid over the protrusion. Depending on the degree of symmetry of the end cap and the connector, there may be one or more angular positions that fulfill this condition.

Preferably, the engagement is obtained by means of a rotation of no more than 180°.

Thus, in a first variant of the system according to the present invention, the first coupling means comprises a substantially cylindrical protrusion presenting an outer threading pattern composed of a number of threaded segments interrupted by non-threaded segments, and the second coupling means comprises a substantially cylindrical bore presenting an inner threading pattern composed of a number of threaded segments interrupted by non-interfering segments; wherein said non-threaded segments are distributed along the circumference of said cylindrical protrusion so as to only allow said substantially cylindrical bore of said connector to slide over said substantially cylindrical protrusion without interference between said threaded segments of said substantially cylindrical protrusion and said threaded segments of said substantially cylindrical bore when said substantially cylindrical bore and said substantially cylindrical protrusion are in one of a set of predetermined relative angular position ranges; and wherein said threaded segments of said substantially cylindrical protrusion are arranged to allow engagement with said threaded segments of said substantially cylindrical bore, when said substantially cylindrical bore has been slid over said substantially cylindrical protrusion, by means of a rotation.

Where reference is made to the substantially cylindrical bore of the connector "sliding over" the substantially cylindrical protrusion of the fluid filter element, this must be understood to cover a relative motion between the connector and the fluid filter element so as to cause the two parts to approach each other and engage which each other. This relative motion may likewise be expressed as the substantially cylindrical protrusion of the fluid filter element "sliding into" the substantially cylindrical bore of the connector.

Alternatively, in a second variant of the system according to the present invention, the first coupling means comprises a substantially cylindrical bore presenting an inner threading pattern composed of a number of threaded segments interrupted by non-interfering segments, and the second coupling means comprises a substantially cylindrical protrusion presenting an outer threading pattern composed of a number of threaded segments interrupted by non-threaded segments; wherein said non-threaded segments are distributed along the circumference of said cylindrical protrusion so as to only allow said substantially cylindrical bore of said fluid filter element to slide over said substantially cylindrical protrusion without interference between said threaded segments of said substantially cylindrical protrusion and said threaded segments of said substantially cylindrical bore when said substantially cylindrical bore and said substantially cylindrical protrusion are in one of a set of predetermined relative angular position ranges; and wherein said threaded segments of said substantially cylindrical protrusion are arranged to allow engagement with said threaded segments of said substantially cylindrical bore, when said substantially cylindrical bore has been slid over said substantially cylindrical protrusion, by means of a rotation.

The substantially cylindrical protrusion is provided with a number of circumferential lobes.

The circumferential lobes are arranged so as to present no rotational symmetry.

**In** another particular embodiment, which is not claimed, the circumferential lobes are arranged so as to present substantial diametral symmetry.

The term "substantial diametral symmetry" refers to true symmetry in the geometric sense, or an arrangement that deviates sufficiently little from true symmetry to appear symmetric to the human eye. The arrangement has the advantage of allowing a human user of the system to visually determine the correct orientation of the parts during assembly of the system (i.e., when the connector is attached to the system, whereby, in a multiple-filter system, it is preferred to install all connectors in substantially the same orientation), and, in use, to determine the proper relative orientation of the parts to initiate the engagement between the protrusion and the bore.

In an embodiment of the system according to the present invention, the threaded segments of the substantially cylindrical protrusion are provided at their protruding end with a length of unthreaded mantle having a diameter corresponding to the major diameter of the threaded segments and a length exceeding the thread pitch of the threaded segments, so as to inhibit the screwing on of an element presenting a thread in the axial range defined by the length of unthreaded mantle.

The diameter of the length of unthreaded mantle preferably has a diameter that is not inferior to, or even superior to, the major diameter of the threaded segments.

It is an advantage of this embodiment that the accidental screwing-on of older screw-thread based filter elements onto the connector of the system according to the present invention, which might result in a system malfunction, can be prevented.

The length of unthreaded mantle may be flush with the outer thread circumference of the threaded segments. It may in particular prevent the screwing on of a continuously threaded bore.

In an embodiment, the system of the present invention further comprises the fluid filter element comprising the end cap, provided with the first coupling means, wherein said first coupling means is detachably engaged with said second coupling means.

Accordingly, the present patent application also covers a system having one or more connectors for receiving fluid filter elements, having corresponding fluid filter element coupled thereto.

According to an aspect of the present invention, there is provided a connector for use in the system of any of the preceding claims, the connector comprising a substantially cylindrical protrusion presenting an outer threading pattern composed of a number of threaded segments interrupted by non-threaded segments, the connector being arranged for cooperating with an end cap of a fluid filter element, said end cap comprising a substantially cylindrical bore presenting an inner threading pattern composed of a number of threaded segments interrupted by non-interfering segments; wherein said non-threaded segments are distributed along the circumference of said cylindrical protrusion so as to only allow said substantially cylindrical bore of said fluid filter element to slide over said substantially cylindrical protrusion without interference between said threaded segments of said substantially cylindrical protrusion and said threaded segments of said substantially cylindrical bore when said substantially cylindrical bore and said substantially cylindrical protrusion are in one of a set of predetermined relative angular position ranges; and wherein said threaded segments of said substantially cylindrical protrusion are arranged to allow engagement with said threaded segments of said substantially cylindrical bore, when said substantially cylindrical bore has been slid over said substantially cylindrical protrusion, by means of a rotation.

According to an aspect of the present invention, there is provided a connector for use in the system of any of the preceding claims, the connector a substantially cylindrical bore presenting an inner threading pattern composed of a number of threaded segments interrupted by non-interfering segments; the connector being arranged for cooperating with an end cap of a fluid filter element, said end cap comprising a substantially cylindrical protrusion presenting an outer threading pattern composed of a number of threaded segments interrupted by non-threaded segments, wherein said non-threaded segments are distributed along the circumference of said cylindrical protrusion so as to only allow said substantially cylindrical bore of said fluid filter element to slide over said substantially cylindrical protrusion without interference between said threaded segments of said substantially cylindrical protrusion and said threaded segments of said substantially cylindrical bore when said substantially cylindrical bore and said substantially cylindrical protrusion are in one of a set of predetermined relative angular position ranges; and wherein said threaded segments of said substantially cylindrical protrusion are arranged to allow engagement with said threaded segments of said substantially cylindrical bore, when said substantially cylindrical bore has been slid over said substantially cylindrical protrusion, by means of a rotation.

According to an aspect of the present invention, there is provided a fluid filter element for use in the fluid filter system as described above, the fluid filter element comprising an end cap adapted to be coupled to the connector mounted on a machine so as to allow fluid to be exchanged between the filter element and the machine, wherein the end cap is provided with the substantially cylindrical bore presenting an inner threading pattern composed of a number of threaded segments interrupted by non-interfering segments, the non-interfering segments remaining outside the space defined by the major diameter of the threaded segments; wherein the non-interfering segments are distributed along the circumference of the cylindrical bore so as to provide no rotational symmetry.

As indicated above, the non-interfering segments may for example be segments devoid of thread (i.e., presenting an interruption in the thread pattern) or segments that are radially displaced relative to the remainder of the end cap so as to be physically unable to engage with the thread on the relevant threaded segments of the connector according to the present invention.

According to an aspect of the present invention, there is provided a fluid filter element for use in the system as described above, the fluid filter element comprising an end cap adapted to be coupled to said connector mounted on a machine so as to allow fluid to be exchanged between said filter element and said machine, wherein said end cap is provided with said substantially cylindrical protrusion presenting an outer threading pattern composed of a number of threaded segments interrupted by non-threaded segments.

This aspect of the disclosure represents an inversion of the roles of the first coupling means and the second coupling means, with the same technical advantages.

In an embodiment, the fluid filter element according to the present invention comprises a filter medium arranged around an axial liner, and the end cap is attached to or of one part with the liner.

If the liner is a rigid, axial liner, the torque required to engage the end cap with the connector may be applied by the end user at the distal end of the liner, which facilitates installation in particular when multiple fluid filter elements are to be installed close to each other.

In an embodiment, the fluid filter element according to the present invention comprises a snap-fit element arranged to maintain engagement between said substantially cylindrical protrusion and said substantially cylindrical bore when full rotational engagement has been achieved.

It is an advantage of this embodiment that the filter element will not easily get disengaged as a result of vibrations of the machine in which it is installed.

According to an aspect of the present invention, there is provided a process for producing a fluid filter element as described above, the process comprising: pressing a metal disc with a mandrel in one or more steps so as to obtain a first end cap with a bore; press rolling the first end cap with a threaded mandrel or laterally pressing the first end cap with a threaded die so as to provide the first end cap with a continuous or segmented inner thread; and assembling the first end cap with a liner, a filter medium, and a second end cap so as to obtain the fluid filter element; wherein the pressing of the metal disc results in a substantially cylindrical shape having a number of lobes that, after the press rolling or lateral pressing step, form the non-interfering segments, while a remainder of the shape form the threaded segments.

The inventor has found that this is a particularly advantageous manner to produce the fluid filter element according to the present invention, requiring minimal adaptations to standard metal working techniques.

The invention also pertains to a metal end cap obtained by the process described above.

According to an aspect of the present invention, there is provided an end cap assembly for a fluid filter element, the end cap assembly comprising an end cap and an inner part connected thereto; wherein the end cap is provided with a substantially cylindrical bore presenting an inner threading pattern composed of a number of threaded segments interrupted by non-interfering segments, the non-interfering segments remaining outside the space defined by the major diameter of the threaded segments and being distributed along the circumference of the cylindrical bore so as to provide no rotational symmetry; wherein the inner part has a top surface which acts, when the fluid filter element is coupled to a system, as a grommet that engages with a corresponding surface on a system inlet of the system; and wherein a lower portion of the inner part forms a tube-shaped outlet channel.

In an embodiment of the end cap assembly according to the present invention, at least one of the end cap and the inner part is made of plastic.

In an embodiment of the end cap assembly according to the present invention, the top surface is provided with bumps or catches.

In an embodiment of the end cap assembly according to the present invention, a thread groove has been skipped to create a ridge, arranged to avoid rotating the end cap in the wrong direction.

In an embodiment of the end cap assembly according to the present invention, a flexible finger is provided to engage with a corresponding ridge on the protrusion on a connector of the system in a snap-fitting manner.

In an embodiment of the end cap assembly according to the present invention, a lower part of the end cap presents a circumferential groove to accommodate a sealing means to sealingly engage with the housing of a fluid filter element onto which the end cap is mounted.

According to an aspect of the invention, an air filter cartridge for connection with a fluid-consuming machine is presented, wherein the air filter cartridge includes an extension of filtration media, an axial liner supporting the media, an end cap operatively connected to the axial liner wherein the end cap (200) includes a sidewall defining a central opening, a seal supported by the end cap, and a connection arrangement configured for connection with a cooperatively shaped connector of the fluid-consuming machine. The connection arrangement includes a plurality of threaded segments interrupted by non-interfering segments, wherein the non-interfering segments are oriented radially beyond a circumference defined by a major diameter of the threaded segments and are distributed along the end cap sidewall.

In an embodiment of the filter cartridge according to the present invention, the end cap further includes a flange extending radially from the circumferential sidewall, wherein the seal is supported by the flange.

In an embodiment of the filter cartridge according to the present invention, the seal includes an axially facing sealing surface.

In an embodiment of the filter cartridge according to the present invention, the plurality of threaded segments are presented on a radially inward side of the end cap sidewall.

In an embodiment of the filter cartridge according to the present invention, the end cap is formed from a polymeric material.

In an embodiment of the filter cartridge according to the present invention, the seal is formed from a rubber or polyurethane material.

In an embodiment of the filter cartridge according to the present invention, the plurality of threaded segments are arranged so as to present rotational asymmetry.

In an embodiment of the filter cartridge according to the present invention, which is not claimed, the plurality of threaded segments are arranged so as to present diametral symmetry.

In an embodiment of the filter cartridge according to the present invention, the threaded segments each include a plurality of axially spaced threaded portions.

It is an advantage of embodiments of the end cap assembly according to the present invention, that it provides a convenient way to produce a fluid filter element having the advantages of the system described above.

### Brief Description of the Figures

These and other features and advantages of embodiments of the present invention will be described in more detail with reference to the attached drawings, in which:
- Figure 1A is a photograph of a known air filter element;
- Figure 1B is a schematic representation of an air cleaning system utilizing a connection system as may be present in an embodiment of the system according to the present invention;
- Figure 2 illustrates a connector as may be present in an embodiment of the system according to the present invention;
- Figure 3 illustrates an end cap for a corresponding fluid filter element;
- Figure 4 schematically illustrates in cross-section an embodiment of the system according to the present invention, in which the substantially cylindrical protrusion is provided with a number of circumferential lobes;
- Figure 5 schematically illustrates in cross-section an end cap for a corresponding fluid filter element;
- Figures 6A to 6D schematically illustrate the mechanical engagement process in an embodiment of the system according to the present invention;
- Figure 7 illustrates further features of an embodiment of the system according to the present invention;
- Figure 8 illustrates further features of an embodiment of the system according to the present invention;
- Figure 9 illustrates further features of an embodiment of the system according to the present invention; and
- Figures 10-15 illustrate another embodiment of the system according to the present invention.

### Description of Embodiments

Throughout the description, aspects of the fluid filter element according to the present invention may be described by reference to an air filter element in a bottom-load system, wherein the filter element has a substantially cylindrical bore in its end cap and the connector presents a substantially cylindrical protrusion. This is done without loss of generality, as the technical effects and advantages of the features of the present invention apply in the same manner to other types of fluid filter elements, including fluid filter elements where the position of the bore and the protrusion are switched, unless indicated otherwise.

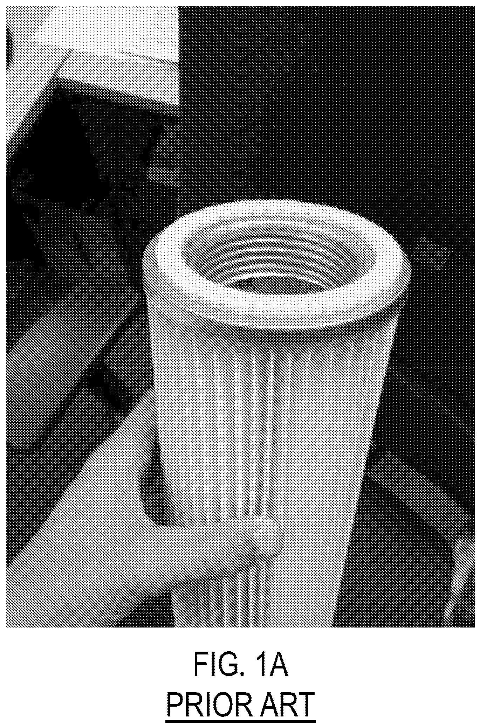

Figure 1A is a photograph of a known air filter element. It comprises a pleated filter medium arranged around an axial liner (not shown), the top end of which presents an open end cap with a cylindrical bore having a female screw thread. An axial seal is provided on the end cap. The end cap may be coupled to a system presenting a cylindrical protrusion having a corresponding male screw thread. The full engagement of the axial seal against the flange of the connector may require a substantial number (e.g. 6) of full rotations of the air filter element, which makes the replacement of air filter elements a rather cumbersome operation.

Embodiments of the present invention overcome this disadvantage by providing a bayonet-type engagement between the connector on the system and the fluid filter element, while maintaining compatibility between the fluid filter element of the invention and legacy systems (one-way backward compatibility).

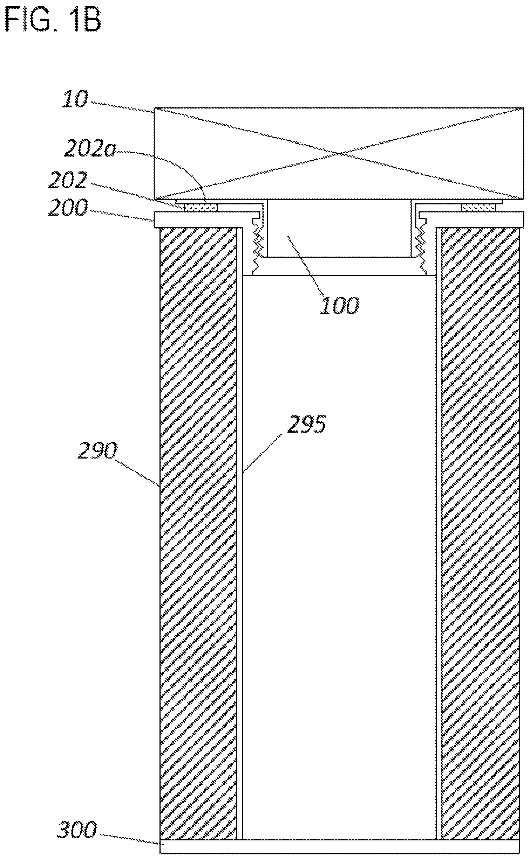

Figure 1B shows an air cleaning system **10** including a connection arrangement **12** for connecting a filter cartridge **14** to a fluid-consuming device **16,** such as an air intake of an internal combustion engine. As explained in further detail below, the connection arrangement **12** may include an end cap disposed **200** disposed on the filter cartridge **14** that interacts with a correspondingly shaped connector **100** disposed on either the fluid consuming device **16** or a housing (not shown) within which the filter cartridge **14** is disposed. In some examples, the filter cartridge 14 can also be provided with an end cap 300 opposite end cap 200. In the embodiment shown at Figure 1B, the end cap 300 is a closed end cap.

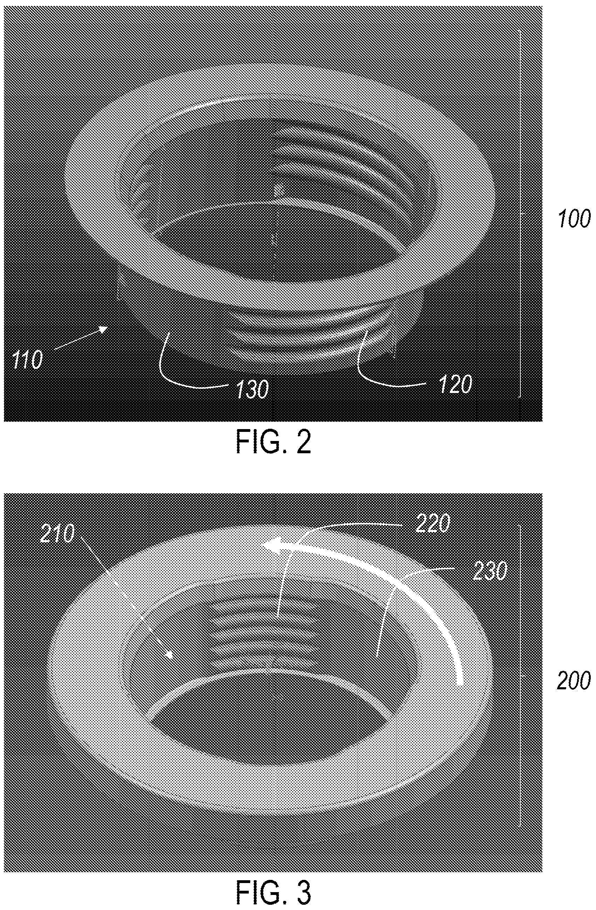

Figure 2 illustrates a connector **100** as may be present in an embodiment of the system according to the present invention, for coupling to a fluid filter element. Without loss of generality, the connector **100** is shown in an orientation where the flange, which is part of the system or attached to the system (for example by spot welding), is shown as the top and the protrusion **100** that receives the fluid filter element is shown as the bottom. This orientation is merely chosen for illustrative purposes. The system may also function in other orientations without departing from the concepts presented herein.

The connector **100** comprises a substantially cylindrical protrusion **110** presenting an outer threading pattern composed of a number of threaded segments **120** interrupted by non-threaded segments **130.**

The non-threaded segments **130** are distributed along the circumference of the cylindrical protrusion **110** so as to allow a substantially cylindrical bore of a fluid filter element (described below) to slide over the substantially cylindrical protrusion **110** without interference between the threaded segments **120** of the substantially cylindrical protrusion **110** and the threaded segments of the substantially cylindrical bore, only when the substantially cylindrical bore and the substantially cylindrical protrusion **110** are in one of a set of predetermined relative angular position ranges (it is here noted again that the set may consist of just a single appropriate relative angular position range). The ranges may span an angle of up to 22.5° on each side of the central position, preferably up to 10° on each side of the central position, more preferably up to 5° on each side of the central position, most preferably up to 2.5° on each side of the central position.

The threaded segments **120** of the substantially cylindrical protrusion **110** are arranged to allow engagement with the threaded segments of the substantially cylindrical bore, when the substantially cylindrical bore has been slid over the substantially cylindrical protrusion **110,** by means of a rotation. The extent of the rotation required to obtain engagement depends on the angular extent of the threaded portions. It is preferably 180° or less (e.g., if a single threaded segment **120** extends over substantially half of the circumference of the substantially cylindrical protrusion **110**), more preferably 90° or less (e.g., if a pair of threaded segments **120** extends over substantially a quarter of the circumference of the substantially cylindrical protrusion **110** each), possibly even 60°, 45°, 30°, or less.

Figure 3 illustrates an end cap **200** for a corresponding fluid filter element. The end cap **200** is provided with a substantially cylindrical bore **210** presenting an inner threading pattern composed of a number of threaded segments **220** interrupted by non-interfering segments **230.** In one aspect, the bore **210,** which has a tubular shape that may or may not be a cylindrical, can be characterized as a sidewall 210 defining a central opening.

As the threading pattern is intended to engage with the threads of the substantially cylindrical protrusion **110** described above, and as this coupling must be capable of supporting the weight of the fluid filter element (in a "suspended" arrangement), the number of threads and their depth is selected in function of the size of the fluid filter element and the according weight to be supported. In industrial contexts, the fluid filter elements may have exemplary diameters ranging from 120 mm to 324 mm and exemplary lengths ranging from 600 mm to 2000 mm or more.

The top flange of the end cap **200** may be provided with a seal or gasket **202** to provide axial sealing between the (clean) inside of the fluid filter element and the system on the one hand, and the (dirty) outside of the fluid filter element on the other hand. The characteristics of this seal or gasket **202** may be selected in function of the requirements of the application, and the type of fluid to be filtered. Thus, in embodiments for use in the context of industrial air filtration, a simple ring of a low-friction foam material may suffice, while other applications may require a compressed or deflected elastomer gasket (e.g. made of rubber or polyurethane). In one aspect, the seal or gasket **202** can have an axially facing seal surface **202a** such that an axial seal (i.e. seals in a plane orthogonal to the longitudinal axis X of the filter cartridge) is formed between the seal or gasket **202** and the connector **100.**

It is clearly visible that in the case illustrated in Figures 2 and 3, the bore **210** of the end cap **200** can be made to slide over the substantially cylindrical protrusion **110** (upwards, in the orientation chosen for Figures 2 and 3), provided that the non-interfering segments **230** of the end cap **200** are angularly aligned with the threaded segments **120** of the substantially cylindrical protrusion **110.** It can also be easily understood that after the end cap **200** has been slid over the substantially cylindrical protrusion **110,** the threaded segments **220** of the end cap **200** can be made to engage with the threaded segments **120** of the substantially cylindrical protrusion **110** by turning the end cap **200** approximately 60° in the direction indicated by the arrow.

Advantageously, the presence of non-interfering segments **230** on the substantially cylindrical bore **210** does not preclude the latter from being screwed onto a prior-art protrusion with a continuous thread, thus achieving one-way backward compatibility.

While the concept of the present invention has been illustrated in Figures 2 and 3 with reference to a design in which the non-interfering segments 230 of the substantially cylindrical bore **210** are obtained by an interruption of the thread, the invention is not limited thereto.

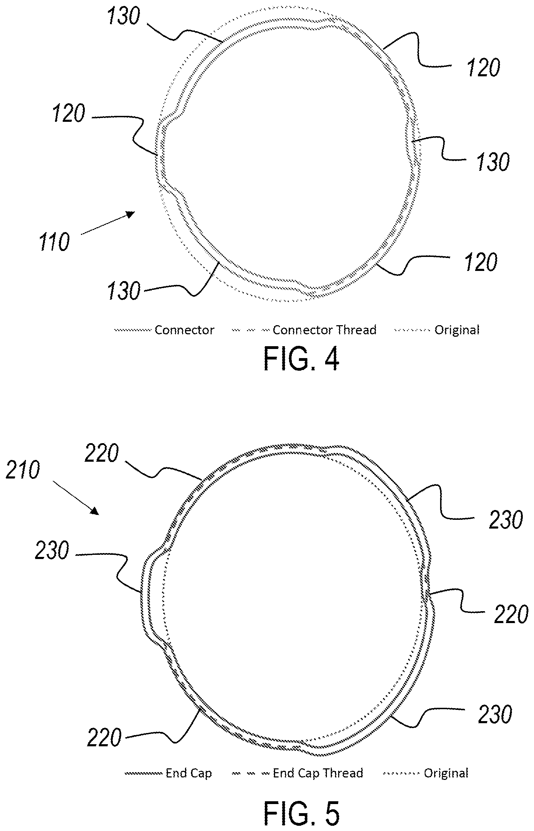

In an embodiment of the system according to the present invention, schematically illustrated in cross-section in Figure 4, the substantially cylindrical protrusion **110** is provided with a number of circumferential lobes.

The radially outwardly protruding lobes of the substantially cylindrical protrusion **110** are the portions where the mantle follows the original cylindrical outline (shown in dotted lines) and these lobes form the threaded segments **120** of the connector **100.** Conversely, the portions between the lobes (the dents or inwardly extending recesses in the cylinder) have no threading (or at most very shallow, non-functional threading), and form the non-threaded segments **130** of the connector.

A corresponding substantially cylindrical bore **210,** schematically illustrated in cross-section in Figure 5, is likewise provided with circumferential lobes, having a complementary function.

The radially outwardly protruding lobes of the substantially cylindrical bore **210** are the portions where the mantle moves away from the original cylindrical outline (shown in dotted lines) and these lobes form the non-interfering segments **230** of the substantially cylindrical bore **210.** Conversely, the portions between the lobes (the dents or inwardly extending recesses in the cylinder) have functional threading, and form the threaded segments **220** of the substantially cylindrical bore **210.**

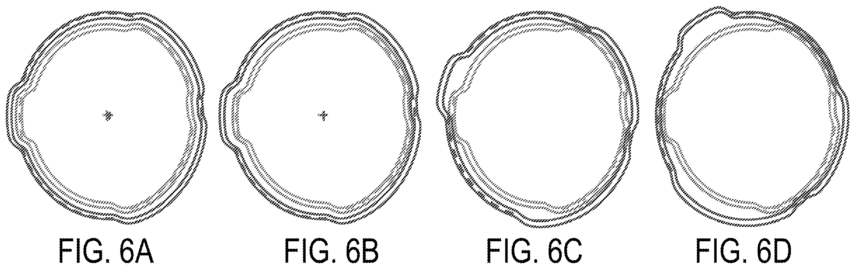

Figures 6A to 6D schematically illustrate the engagement process between the end cap **200** and connector **100.** In Figure 6A, the substantially cylindrical bore **210** is slid over the substantially cylindrical protrusion **110** by choosing a relative angular orientation in which the non-interfering segments **230** of the bore **210** are aligned with the threaded segments **120** of the connector **100.**

During the sliding movement, the bore **210** and the protrusion **110** need not be perfectly coaxial, in fact, some degree or a little eccentricity of the bore **210** may facilitate the sliding between the components. The initiating of the rotating movement will tend to recenter the bore **210** relative to the protrusion **110,** so as to arrive at situation shown at Figure 6B.

In situation shown at Figure 6C, the bore **210** has been rotated over approximately 20° in the direction of engagement. Threaded segments **220** of the bore **210** have begun to engage with threaded segments **120** of the protrusion **110.**

In situation shown at Figure 6D, the bore **210** has been rotated over approximately 60° in the direction of engagement. Threaded segments **220** of the bore **210** have fully engaged with threaded segments **120** of the protrusion **110.**

As shown in Figures 4-6, the lobes of the connector are arranged so as to present no rotational symmetry, thus forcing the installation of the fluid filter element to occur under a specific angular orientation. As the lobes are visible on the outside of the protrusion **110** and at the open end of the end cap **200,** it is easy for the end user to see how the fluid filter element must be held in order to fit onto the connector **100.**

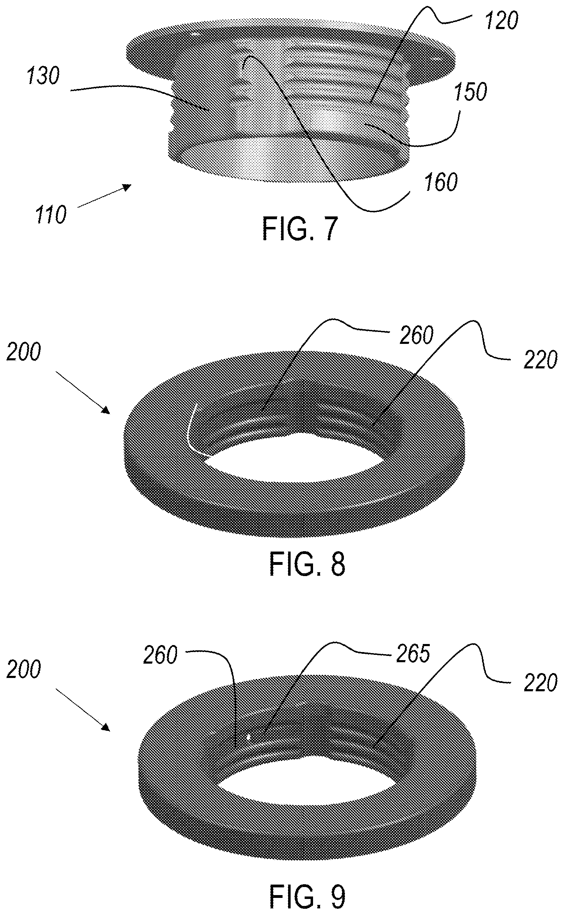

As illustrated in Figure 7, the threaded segments **120** of the substantially cylindrical protrusion **110** are preferably provided at their protruding end with a length of unthreaded mantle **150** having a diameter corresponding to (preferably not inferior to, or superior to) the major diameter of the threaded segments **120** and a length exceeding the thread pitch of the threaded segments **120,** so as to inhibit the screwing on of an element presenting a thread in the axial range defined by the length of unthreaded mantle.

The effect of the length of unthreaded mantle **150** is twofold. On the one hand, it avoids inadvertently screwing an old fluid filter element (with a continuous thread) onto a connector of the system according to the present invention. On the other hand, it forces the substantially threaded bore **210** to be slid far enough up the protrusion **110** before the bayonet-type engagement can be initiated. In this way, it can be ensured that the top of the end cap **200** effectively ends up against the flange of the connector **100** at the end of the engagement rotation, thereby compressing any seal that may be provided there.

It must be noted that in embodiments where the connector **100** is provided with a substantially cylindrical bore and the end cap **200** of the filter element comprises a substantially cylindrical protrusion presenting an outer threading pattern composed of a number of threaded segments interrupted by non-threaded segments, the length of unthreaded mantle **150** should still be provided on the connector **100.** In such cases, after the substantially cylindrical protrusion of the end cap **200** has been slid sufficiently far into the substantially cylindrical bore of the connector **100,** the threaded segments in the substantially cylindrical bore of the connector **100** can be made to engage with the threaded segments **120** of the substantially cylindrical protrusion of the end cap **200** by turning the end cap **200** over the required angle (e.g., approximately 60° in the direction indicated by the arrow as shown in Figure 3 for the reverse embodiment).

An additional protection against back-rotation **160, 260** may be provided to avoid rotating the end cap in the wrong direction. Figure 7 illustrates a narrow threaded segment in which a single thread groove has been skipped so as to leave a ridge **160.** In Figure 8, a ridge or wedge **260** can be seen in a corresponding position of the end cap **200.** Both elements **160, 260** are positioned so as to ensure that rotation is only allowed in one direction.

As shown in Figure 9, the ridge or wedge **260** may be provided with a flexible finger **265** that, in combination with the ridge **160** of the protrusion, form a snap-fit lock. It is an additional advantage of this arrangement that the user hears and/or feels a "click" as the snap-fit lock **160, 260** engages, which signals the fact that a sufficiently tight engagement has been achieved, whereby the seal is compressed. The snap-fit lock **160, 260** is preferably designed in such a way that it can be disengaged by manual rotational force.

Referring back to Figure 3, the present invention also pertains to a fluid filter element for use in the fluid filter system as described above, the fluid filter element comprising an end cap **200** adapted to be coupled to the connector **100** mounted on a machine so as to allow fluid to be exchanged between the filter element and the machine, wherein the end cap **200** is provided with the cylindrical bore **210** presenting an inner threading pattern composed of a number of threaded segments **220** interrupted by non-interfering segments **230,** the non-interfering segments **230** remaining outside the space defined by the major diameter of the threaded segments **220;** wherein the non-interfering segments **230** are distributed along the circumference of the cylindrical bore **210** so as to provide no rotational symmetry.

The fluid filter element may further comprise a filter medium arranged around and/or inside an axial liner, wherein the end cap **200** is attached to or of one part with the liner.

The presence of a rigid liner allows the end user to exert the necessary torque to the distal end of the liner. The distal end of the liner (or the second end cap provided there) may be provided for this purpose with an element that can easily be gripped with a wrench, such as a hexagonal protrusion.

The invention also pertains to a process for producing a filter element as described above, the process comprising:
- pressing a metal disc with a mandrel in one or more steps so as to obtain a first end cap **200** with a bore **210;**
- press rolling the first end cap with a threaded mandrel or laterally pressing the first end cap with a threaded die so as to provide the first end cap **200** with a continuous or segmented inner thread; and
- assembling the first end cap **200** with a liner, a filter medium, and a second end cap so as to obtain the air filter element;
wherein the pressing of the metal disc results in a substantially cylindrical shape having a number of lobes that, after the press rolling or lateral pressing step, form the non-interfering segments **230,** while a remainder of the shape form the threaded segments **220.**

Depending on the arrangement of the threaded mandrel or the threaded die, the process described above may result in a semi-symmetrical cylinder shape or a substantially symmetrical shape. A substantially symmetrical shape may be preferred from a manufacturing point of view, because it can be obtained with a set of partial dies (e.g. 4 dies) that are subject to a substantially equal load during the press rolling step. When a semi-cylindrical shape is used, the operator can recognize the correct orientation for insertion and locking of the fluid filter element from the shape itself (e.g. by recognizing a particular axis in a semi-symmetrical arrangement). When a substantially symmetrical cylinder shape is used, graphical indicators such as arrows and lock symbols may be provided to aid the user in correctly aligning the fluid filter element prior to insertion, and correctly rotating it to achieve an adequate lock.

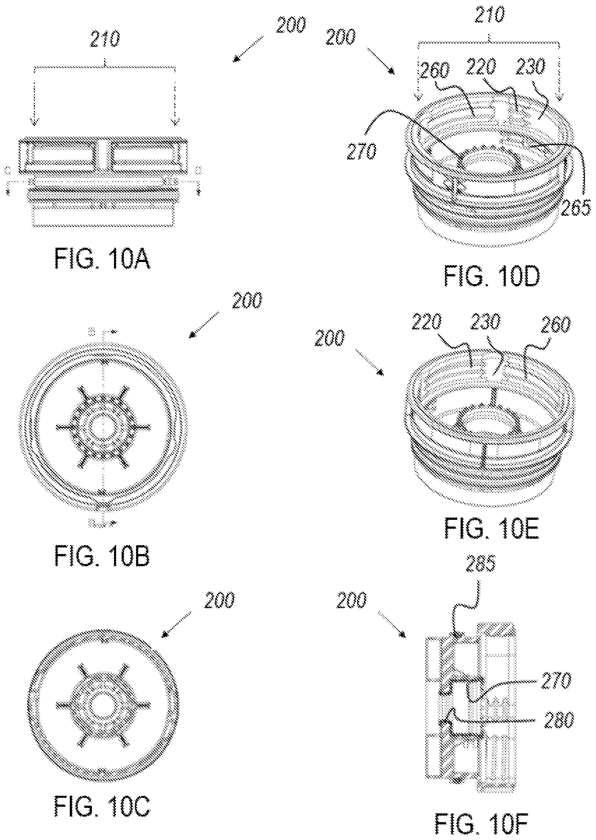

Figures 10-15 illustrate another embodiment of the system according to the present invention and its parts. This embodiment may, for example, be used in the context of oil filtration.

Figures 10A to 10F present a top view, a front view, cross-sections, and perspectives of an end cap **200,** for example made of plastic, provided with a substantially cylindrical bore **210** presenting an inner threading pattern composed of a number of threaded segments **220** interrupted by non-interfering segments **230.** The non-interfering segments **230** remain outside the space defined by the major diameter of the threaded segments **220.** The non-interfering segments **230** are distributed along the circumference of the cylindrical bore **210** so as to provide no rotational symmetry.

A single thread groove has been skipped to create a ridge **260,** to avoid rotating the end cap in the wrong direction. A flexible finger **265** is provided to engage with a corresponding ridge on the protrusion on the connector. In contrast to the embodiment of Figure 9, the flexible finger **265** of this embodiment is provided separately from the ridge **260.** In the illustrated embodiment, the snap-fit is provided in a longitudinal zone that is without thread, to facilitate manufacturing; in other embodiments, this feature may be provided in the longitudinal zone that has threading.

The end cap **200** is connected to an inner part, preferably made of plastic, the top surface of which acts as a grommet **270** that engages with a corresponding surface on the system inlet when the fluid filter element is coupled to the system. Preferably, the grommet is provided with some bumps, protrusions, or catches that ensure the grommet's resistance to rotation under the influence of the vibrations that may be expected to occur in an engine environment. The lower portion of the inner part forms a tube-shaped outlet channel **280.**

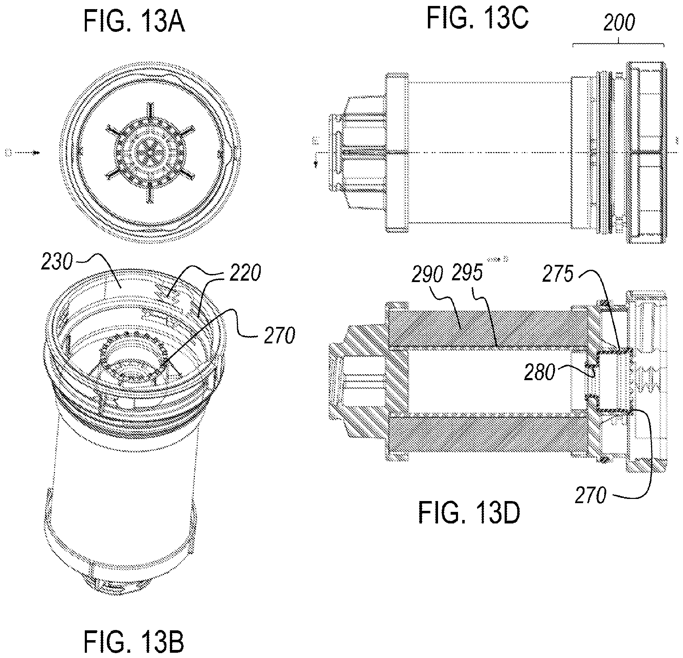

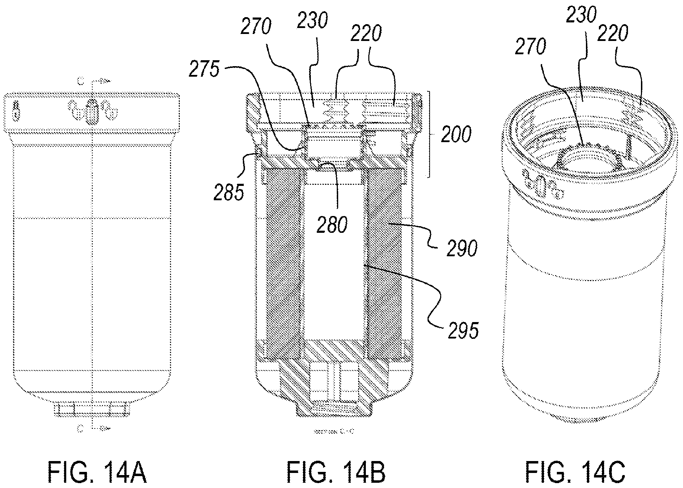

The lower part of the end cap **200** presents a circumferential groove to accommodate an O-ring **285** to sealingly engage with the housing (canister) of a fluid filter element onto which the end cap **200** is mounted (see Figures 13A-13D and 14A-14C).

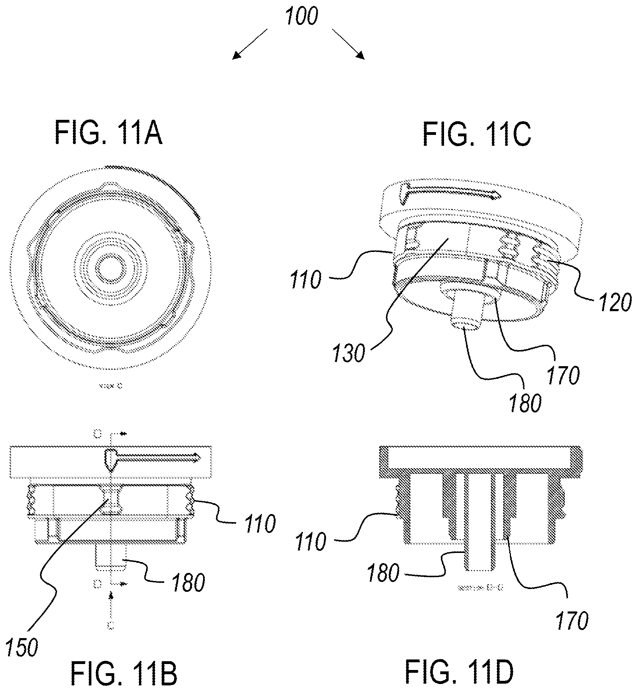

Figures 11A to 11D present a top view, a front view, cross-sections, and perspectives of a corresponding embodiment of the connector **100** according to the present invention. The connector **100** comprises a substantially cylindrical protrusion **110** presenting an outer threading pattern composed of a number of threaded segments **120** interrupted by non-threaded segments **130.** A length of unthreaded mantle **150** having a diameter corresponding to (preferably not inferior to, or superior to) the major diameter of the threaded segments **120** and a length exceeding the thread pitch of the threaded segments **120,** is provided to inhibit the screwing on of an element presenting a thread in the axial range defined by the length of unthreaded mantle. An inlet tube **180** is provided, which, during installation of the fluid filter element, is received in the tube-shaped outlet channel **280.** Upon completion of the coupling process, the grommet **270** of the fluid filter element engages with the surface **170.**

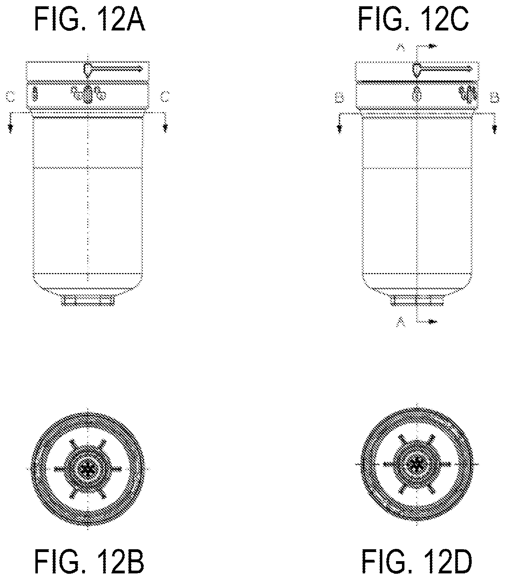

Figures 12A-12D illustrate the relative positions of the filter fluid element with end cap **200** and the system with connector **100** during insertion (Figures 12A-12B) and after full rotational engagement (Figures 12C-12D). Graphical indicators such as arrows and lock symbols aid the user in correctly aligning the fluid filter element prior to insertion, and correctly rotating it to achieve an adequate lock. As these symbols unambiguously identify the correct orientation for insertion and locking, the threaded parts no longer have to be shaped in such a way that the operator can recognize the correct orientation from the shape itself (e.g. by recognizing a particular axis in a semi-symmetrical arrangement).

Figures 13A-13D and 14A-14C illustrate an embodiment of a fluid filter element for use in the system of the present invention. A filtration medium **290,** such as a pleated medium, is arranged around an axial liner **295,** having an end cap **200** as described above attached to it.

The end cap **200** of the filter element may be substantially made of plastic. The fluid filter element may be assembled by sliding a part of the metal canister housing the filter medium **290** over it and folding it inwards. At that point, the O-ring **285** of the end cap **200** sealingly engages with the canister. The assembly may be secured against relative rotation of the parts, for example by making a dent in the sheet metal of the canister that catches into the plastic of the end cap **200.**

The end cap **200** is adapted to be coupled to the connector **100** mounted on a machine so as to allow fluid to be exchanged between the filter element and the machine. The end cap **200** is provided with the cylindrical bore **210** presenting an inner threading pattern as described above in connection with Figure 10.

The end cap **200** may be combined with an inner part **275** to form an end cap assembly. The inner part **275** of the end cap assembly, preferably made of plastic, has a preferably toothed top surface **270** acting as a grommet that engages with a corresponding surface **170** on the system inlet when the fluid filter element is coupled to the system. The lower portion **280** of the inner part **275** forms a tube-shaped outlet channel, communicating with the inner cavity of the axial liner **295,** which delimits the clean side of the filter medium **290.**

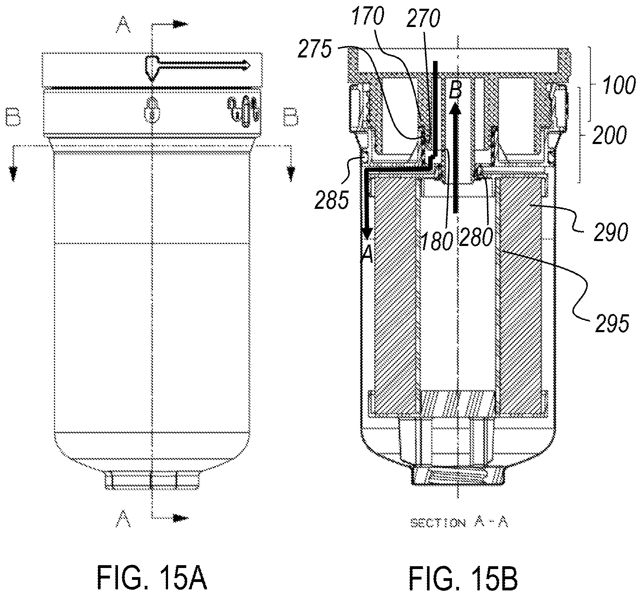

Figure 15 illustrates an embodiment of a fluid filter element with end cap **200** and the system with connector **100** after full rotational engagement (cfr. Figure 12C-D, right-hand figure). A filtration medium **290,** such as a pleated medium, is arranged around an axial liner **295,** having an end cap **200** as described above attached to it. The end cap **200** is coupled to the connector **100** mounted on a machine so as to allow fluid to be exchanged between the filter element and the machine. The end cap **200** is provided with the cylindrical bore **210** presenting an inner threading pattern as described above in connection with Figure 10.

The end cap **200** is combined with an inner part **275** as described above in connection with Figures 13 and 14, which may for example be overmolded or mechanically secured. The top surface **270** acts as a grommet that axially engages with the corresponding surface **170** on the system inlet. Bumps or teeth on top of the grommet **270** prevent loosening of the grommet under the influence of the vibrations that occur in a typical machine environment. The grommet has two sealing regions to separate the "clean" fluid side from the "dirty" fluid side.

Bold arrows schematically illustrate the flow of "dirty" fluid (arrow A) and of "clean" fluid (arrow B). The "dirty" fluid (arrow A) passes through special horizontal flow channels below the sealing area with the canister to guide the central incoming flow to the outside of the media.

As can be seen, the lower portion **280** of the inner part **275** forms a tube-shaped outlet channel, communicating with the inner cavity of the axial liner **295,** which delimits the clean side of the filter medium **290,** and sealingly receiving the central inlet tube **180** of the connector **100.**

The configuration of the seals described above has the advantage that any liquids present in the canister prior to servicing will remain in the canister when the filter element is removed for servicing.

In variants of the illustrated embodiment, the part above the O-ring **285** of the endcap **200** can be shortened by decreasing the number of thread cycles and/or including the snap fit system in the thread region.

While the invention has been described hereinabove with reference to particular embodiments, this was done to clarify and not to limit the invention, the scope of which is to be determined by reference to the accompanying claims. In particular, features that have been described as pertaining to the fluid filter element, in particular to the substantially cylindrical bore, may be applied with the same technical effects and advantages to the connector, if it is the connector that is provided with a bore and the fluid filter element that is provided with a protrusion. Conversely, features that have been described as pertaining to the connector, in particular to the substantially cylindrical protrusion, may be applied with the same technical effects and advantages to the fluid filter element, if it is the fluid filter element that is provided with a protrusion and the connector that is provided with a bore.

## Claims

1. A connector (100) comprising a substantially cylindrical protrusion (110) presenting an outer threading pattern composed of a number of threaded segments (120) interrupted by non-threaded segments (130), the connector (100) being arranged for cooperating with an end cap (200) of a fluid filter element, said end cap (200) comprising a substantially cylindrical bore (210) presenting an inner threading pattern composed of a number of threaded segments (220) interrupted by non-interfering segments (230); wherein said non-threaded segments (130) are distributed along the circumference of said cylindrical protrusion (110) so as to only allow said substantially cylindrical bore (210) of said fluid filter element to slide over said substantially cylindrical protrusion (110) without interference between said threaded segments (120) of said substantially cylindrical protrusion (110) and said threaded segments (220) of said substantially cylindrical bore (210) when said substantially cylindrical bore (200) and said substantially cylindrical protrusion (100) are in one particular predetermined relative angular position range;
wherein said threaded segments (120) of said substantially cylindrical protrusion (100) are arranged to allow engagement with said threaded segments (220) of said substantially cylindrical bore (210), when said substantially cylindrical bore (210) has been slid over said substantially cylindrical protrusion (110), by means of a rotation; and wherein said substantially cylindrical protrusion (110) is provided with a number of circumferential lobes forming said threaded segments (120); and
wherein said circumferential lobes are arranged so as to present no rotational symmetry.

2. A connector
comprising a substantially cylindrical bore presenting an inner threading pattern composed of a number of threaded segments interrupted by non-interfering segments;
the connector being arranged for cooperating with an end cap of a fluid filter element, said end cap comprising a substantially cylindrical protrusion presenting an outer threading pattern composed of a number of threaded segments interrupted by non-threaded segments;
wherein said non-threaded segments are distributed along the circumference of said cylindrical protrusion so as to only allow said substantially cylindrical bore of said fluid filter element to slide over said substantially cylindrical protrusion without interference between said threaded segments of said substantially cylindrical protrusion and said threaded segments of said substantially cylindrical bore when said substantially cylindrical bore and said substantially cylindrical protrusion are in one particular predetermined relative angular position range;
wherein said threaded segments of said substantially cylindrical protrusion are arranged to allow engagement with said threaded segments of said substantially cylindrical bore, when said substantially cylindrical bore has been slid over said substantially cylindrical protrusion, by means of a rotation; and wherein said substantially cylindrical bore is provided with a number of circumferential lobes forming said threaded segments; and
wherein said circumferential lobes are arranged so as to present no rotational symmetry.

3. A fluid filter element comprising an end cap (200) adapted to be coupled to a connector (100) mounted on a machine so as to allow fluid to be exchanged between said filter element and said machine;
wherein said end cap (200) is provided with said cylindrical bore (210) presenting an inner threading pattern composed of a number of threaded segments (220) interrupted by non-interfering segments (230), said non-interfering segments (230)remaining outside the space defined by the major diameter of said threaded segments (220); and
wherein said non-interfering segments (230) are distributed along the circumference of said cylindrical bore (210) so as to provide no rotational symmetry.

4. A fluid filter element comprising an end cap adapted to be coupled to a connector mounted on a machine so as to allow fluid to be exchanged between said filter element and said machine, wherein said end cap is provided with said substantially cylindrical protrusion presenting an outer threading pattern composed of a number of threaded segments interrupted by non-threaded segments, wherein said substantially cylindrical protrusion is provided with a number of circumferential lobes forming said threaded segments; and
wherein said circumferential lobes are arranged so as to present no rotational symmetry.

5. The fluid filter element according to claim 3 or 4, further comprising a filter medium (290) arranged around a rigid axial liner (295), wherein the end cap (200) is attached to one or both of the media and the rigid axial liner.

6. The fluid filter element according to any of claims 3-5, further comprising a snap-fit element (265) arranged to maintain engagement between said substantially cylindrical protrusion and said substantially cylindrical bore when full rotational engagement has been achieved.

7. A system comprising a connector according to claim 1 and a fluid filter element according to claim 3, or comprising a connector to claim 2 and a fluid filter element according to claim 4.

## Patentansprüche

1. Verbinder (100), der einen im Wesentlichen zylindrischen Vorsprung (110) umfasst, der ein Außengewindemuster aufweist, das aus einer Anzahl von mit Gewinde versehenen Segmenten (120) besteht, die durch nicht mit Gewinde versehene Segmente (130) unterbrochen werden, wobei der Verbinder (100) zum Zusammenwirken mit einer Endkappe (200) eines Fluidfilterelements angeordnet ist, wobei die Endkappe (200) eine im Wesentlichen zylindrische Bohrung (210) umfasst, die ein Innengewindemuster aufweist, das aus einer Anzahl von mit Gewinde versehenen Segmenten (220) besteht, die durch nicht eingreifende Segmente (230) unterbrochen werden, wobei die nicht mit Gewinde versehenen Segmente (130) entlang des Umfangs des zylindrischen Vorsprungs (110) so verteilt sind, dass sie nur ermöglichen, dass sich die im Wesentlichen zylindrische Bohrung (210) des Fluidfilterelements über den im Wesentlichen zylindrischen Vorsprung (110) schiebt, ohne Ineinandergreifen zwischen den mit Gewinde versehenen Segmenten (120) des im Wesentlichen zylindrischen Vorsprungs (110) und den mit Gewinde versehenen Segmenten (220) der im Wesentlichen zylindrischen Bohrung (210), wenn sich die im Wesentlichen zylindrische Bohrung (210) und der im Wesentlichen zylindrische Vorsprung (110) in einem besonderen vorbestimmten relativen Winkelpositionsbereich befinden,
wobei die mit Gewinde versehenen Segmente (120) des im Wesentlichen zylindrischen Vorsprungs (110) angeordnet sind, um einen Eingriff mit den mit Gewinde versehenen Segmenten (220) der im Wesentlichen zylindrischen Bohrung (210) zu ermöglichen, wenn die im Wesentlichen zylindrische Bohrung (210) über den im Wesentlichen zylindrischen Vorsprung (110) geschoben worden ist, mit Hilfe einer Drehung, und wobei der im Wesentlichen zylindrische Vorsprung (110) mit einer Anzahl von umlaufenden Nocken versehen ist, welche die mit Gewinde versehenen Segmente (120) bilden, und
wobei die umlaufenden Nocken so angeordnet sind, dass sie keine Rotationssymmetrie aufweisen.

2. Verbinder, der eine im Wesentlichen zylindrische Bohrung umfasst, die ein Innengewindemuster aufweist, das aus einer Anzahl von mit Gewinde versehenen Segmenten besteht, die durch nicht eingreifende Segmente unterbrochen werden,
wobei der Verbinder zum Zusammenwirken mit einer Endkappe eines Fluidfilterelements angeordnet ist, wobei die Endkappe einen im Wesentlichen zylindrischen Vorsprung umfasst, der ein Außengewindemuster aufweist, das aus einer Anzahl von mit Gewinde versehenen Segmenten besteht, die durch nicht mit Gewinde versehene Segmente unterbrochen werden,
wobei die nicht mit Gewinde versehenen Segmente entlang des Umfangs des zylindrischen Vorsprungs so verteilt sind, dass sie nur ermöglichen, dass sich die im Wesentlichen zylindrische Bohrung des Fluidfilterelements über den im Wesentlichen zylindrischen Vorsprung schiebt, ohne Ineinandergreifen zwischen den mit Gewinde versehenen Segmenten des im Wesentlichen zylindrischen Vorsprungs und den mit Gewinde versehenen Segmenten der im Wesentlichen zylindrischen Bohrung, wenn sich die im Wesentlichen zylindrische Bohrung und der im Wesentlichen zylindrische Vorsprung in einem besonderen vorbestimmten relativen Winkelpositionsbereich befinden,
wobei die mit Gewinde versehenen Segmente des im Wesentlichen zylindrischen Vorsprungs angeordnet sind, um einen Eingriff mit den mit Gewinde versehenen Segmenten der im Wesentlichen zylindrischen Bohrung zu ermöglichen, wenn die im Wesentlichen zylindrische Bohrung über den im Wesentlichen zylindrischen Vorsprung geschoben worden ist, mit Hilfe einer Drehung, und wobei der im Wesentlichen zylindrische Vorsprung mit einer Anzahl von umlaufenden Nocken versehen ist, welche die mit Gewinde versehenen Segmente bilden, und
wobei die umlaufenden Nocken so angeordnet sind, dass sie keine Rotationssymmetrie aufweisen.

3. Fluidfilterelement, das eine Endkappe (200) aufweist, die angepasst ist, um an einen Verbinder (100) gekoppelt zu werden, der an einer Maschine angebracht ist, um so zu ermöglichen, dass Fluid zwischen dem Filterelement und der Maschine ausgetauscht wird,
wobei die Endkappe (200) mit der zylindrischen Bohrung (210) versehen ist, die ein Innengewindemuster aufweist, das aus einer Anzahl von mit Gewinde versehenen Segmenten (220) besteht, die durch nicht eingreifende Segmente (230) unterbrochen werden, wobei die nicht eingreifenden Segmente (230) außerhalb des Raumes verbleiben, der durch den Außendurchmesser der mit Gewinde versehenen Segmente (220) definiert wird, und
wobei die nicht eingreifenden Segmente (230) entlang des Umfangs der zylindrischen Bohrung (210) so verteilt sind, dass sie keine Rotationssymmetrie aufweisen.

4. Fluidfilterelement, das eine Endkappe aufweist, die angepasst ist, um an einen Verbinder gekoppelt zu werden, der an einer Maschine angebracht ist, um so zu ermöglichen, dass Fluid zwischen dem Filterelement und der Maschine ausgetauscht wird,
wobei die Endkappe mit dem im Wesentlichen zylindrischen Vorsprung versehen ist, der ein Außengewindemuster aufweist, das aus einer Anzahl von mit Gewinde versehenen Segmenten besteht, die durch nicht mit Gewinde versehene Segmente unterbrochen werden, wobei der im Wesentlichen zylindrische Vorsprung mit einer Anzahl von umlaufenden Nocken versehen ist, welche die mit Gewinde versehenen Segmente bilden, und
wobei die umlaufenden Nocken so angeordnet sind, dass sie keine Rotationssymmetrie aufweisen.

5. Fluidfilterelement nach Anspruch 3 oder 4, das ferner ein Filtermedium (290) umfasst, das um eine starre axiale Auskleidung (295) angeordnet ist, wobei die Endkappe (200) an einem oder beiden von dem Medium und der starren axialen Auskleidung befestigt ist.

6. Fluidfilterelement nach einem der Ansprüche 3 bis 5, das ferner ein Schnappverschlusselement (265) umfasst, das angeordnet ist, um einen Eingriff zwischen dem im Wesentlichen zylindrischen Vorsprung und der im Wesentlichen zylindrischen Bohrung aufrechtzuerhalten, wenn ein vollständiger Drehungseingriff erreicht worden ist.

7. System, das einen Verbinder nach Anspruch 1 und ein Fluidfilterelement nach Anspruch 3 umfasst oder einen Verbinder nach Anspruch 2 und ein Fluidfilterelement nach Anspruch 4 umfasst.

## Revendications

1. Connecteur (100) comprenant une protubérance sensiblement cylindrique (110) présentant un motif de filetage extérieur composé d'un certain nombre de segments filetés (120) interrompus par des segments non filetés (130), le connecteur (100) étant agencé pour coopérer avec un capuchon d'extrémité (200) d'un élément formant filtre à fluide, ledit capuchon d'extrémité (200) comprenant un alésage sensiblement cylindrique (210) présentant un motif de filetage intérieur composé d'un certain nombre de segments filetés (220) interrompus par des segments non interférents (230) ; dans lequel lesdits segments non filetés (130) sont répartis le long de la circonférence de ladite protubérance cylindrique (110) de manière à uniquement permettre audit alésage sensiblement cylindrique (210) dudit élément formant filtre à fluide de coulisser sur ladite protubérance sensiblement cylindrique (110) sans interférence entre lesdits segments filetés (120) de ladite protubérance sensiblement cylindrique (110) et lesdits segments filetés (220) dudit alésage sensiblement cylindrique (210) lorsque ledit alésage sensiblement cylindrique
(200) et ladite protubérance sensiblement cylindrique
(100) sont dans une plage de position angulaire relative prédéterminée particulière ;
dans lequel lesdits segments filetés (120) de ladite protubérance sensiblement cylindrique (100) sont agencés pour permettre une mise en prise avec lesdits segments filetés (220) dudit alésage sensiblement cylindrique (210), lorsque ledit alésage sensiblement cylindrique (210) a été coulissé sur ladite protubérance sensiblement cylindrique (110), au moyen d'une rotation ; et dans lequel ladite protubérance sensiblement cylindrique (110) est pourvue d'un certain nombre de lobes circonférentiels formant lesdits segments filetés (120) ; et
dans lequel lesdits lobes circonférentiels sont agencés de manière à ne présenter aucune symétrie de révolution.

2. Connecteur comprenant un alésage sensiblement cylindrique présentant un motif de filetage intérieur composé d'un certain nombre de segments filetés interrompus par des segments non interférents ;
le connecteur étant agencé pour coopérer avec un capuchon d'extrémité d'un élément formant filtre à fluide, ledit capuchon d'extrémité comprenant une protubérance sensiblement cylindrique présentant un motif de filetage extérieur composé d'un certain nombre de segments filetés interrompus par des segments non filetés ;
dans lequel lesdits segments non filetés sont répartis le long de la circonférence de ladite protubérance cylindrique de manière à uniquement permettre audit alésage sensiblement cylindrique dudit élément formant filtre à fluide de coulisser sur ladite protubérance sensiblement cylindrique sans interférence entre lesdits segments filetés de ladite protubérance sensiblement cylindrique et lesdits segments filetés dudit alésage sensiblement cylindrique lorsque ledit alésage sensiblement cylindrique et ladite protubérance sensiblement cylindrique sont dans une plage de position angulaire relative prédéterminée particulière ;
dans lequel lesdits segments filetés de ladite protubérance sensiblement cylindrique sont agencés pour permettre une mise en prise avec lesdits segments filetés dudit alésage sensiblement cylindrique, lorsque ledit alésage sensiblement cylindrique a été coulissé sur ladite protubérance sensiblement cylindrique, au moyen d'une rotation ; et
dans lequel ledit alésage sensiblement cylindrique est pourvu d'un certain nombre de lobes circonférentiels formant lesdits segments filetés ; et
dans lequel lesdits lobes circonférentiels sont agencés de manière à ne présenter aucune symétrie de révolution.

3. Élément formant filtre à fluide comprenant un capuchon d'extrémité (200) conçu pour être couplé à un connecteur (100) monté sur une machine de manière à permettre un échange de fluide entre ledit élément filtrant et ladite machine ;
dans lequel ledit capuchon d'extrémité (200) est pourvu dudit alésage cylindrique (210) présentant un motif de filetage intérieur composé d'un certain nombre de segments filetés (220) interrompus par des segments non interférents (230), lesdits segments non interférents (230) restant à l'extérieur de l'espace défini par le diamètre extérieur desdits segments filetés (220) ; et
dans lequel lesdits segments non interférents (230) sont répartis le long de la circonférence dudit alésage cylindrique (210) de manière à ne fournir aucune symétrie de révolution.

4. Élément formant filtre à fluide comprenant un capuchon d'extrémité conçu pour être couplé à un connecteur monté sur une machine de manière à permettre un échange de fluide entre ledit élément filtrant et ladite machine,
dans lequel ledit capuchon d'extrémité est pourvu de ladite protubérance sensiblement cylindrique présentant un motif de filetage extérieur composé d'un certain nombre de segments filetés interrompus par des segments non filetés, dans lequel ladite protubérance sensiblement cylindrique est pourvue d'un certain nombre de lobes circonférentiels formant lesdits segments filetés ; et
dans lequel lesdits lobes circonférentiels sont agencés de manière à ne présenter aucune symétrie de révolution.

5. Élément formant filtre à fluide selon la revendication 3 ou 4, comprenant en outre un média filtrant (290) agencé autour d'une doublure axiale rigide (295), dans lequel le capuchon d'extrémité (200) est fixé à l'un et/ou l'autre parmi le média et la doublure axiale rigide.

6. Élément formant filtre à fluide selon l'une quelconque des revendications 3 à 5, comprenant en outre un élément à encliquetage (265) agencé pour maintenir une mise en prise entre ladite protubérance sensiblement cylindrique et ledit alésage sensiblement cylindrique lorsqu'une mise en prise rotative complète a été obtenue.

7. Système comprenant un connecteur selon la revendication 1 et un élément formant filtre à fluide selon la revendication 3, ou comprenant un connecteur selon la revendication 2 et un élément formant filtre à fluide selon la revendication 4.
